# EUROPÄISCHE PATENTSCHRIFT

(11) **EP 0 563 535 B1**
(45) Veröffentlichungstag und Bekanntmachung des Hinweises auf die Patenterteilung: **18.09.1996**
(21) Anmeldenummer: 93101690.1
(22) Anmeldetag: 04.02.1993
(51) Int. Cl.: H02B 13/035

(54) **Metallgekapselte, mit SF6 isolierte Schaltanlage mit einer Sammelschienenanordnung**
Metall-clad SF6-gas-insulated switchgear having an array of distributing bus-bars
Installation de commutation à blindage métallique isolée par SF6 avec jeu de barres omnibus

(30) Priorität: 01.04.1992 DE 4210773
(43) Veröffentlichungstag der Anmeldung: 06.10.1993
(73) Patentinhaber: Felten & Guilleaume Energietechnik AG, D-51058 Köln (DE)
(72) Erfinder: Deharde, Horst, W-4151 Kempen 1 (DE); Dirks, Rolf, W-4156 Willich 4 (DE); Lauer, Hans Dieter, W-4130 Moers 1 (DE); Mooz, Dietrich, Dipl.-Ing., W-4150 Krefeld (DE); Nandzik, Karl, Dipl.-Ing., W-4055 Overhetfeld (DE)

(56) Entgegenhaltungen:
- EP-A- 0 564 057
- DE-A- 2 729 571
- DE-A- 4 001 192
- FR-A- 2 279 239

## Beschreibung

Die Erfindung gemäß dem Oberbegriff des Anspruchs 1 des Anspruchssatzes 1 betrifft eine metallgekapselte, druckgasisolierte SF₆ -Schaltanlage mit einer Sammelschienenanordnung.

Eine derartige Schaltanlage ist bereits bekannt (DE-OS 40 11 397). Hierbei sind mehrere Lasttrennschalter in einem gemeinsamen Gastank angeordnet. Diese Bauweise verursacht die geringsten Kosten und wird deshalb bei Netzstationen von den Energieversorgungsunternehmen (EVU) mit immer gleichen Schaltbildern verwendet. Dies führt dazu, daß sich eine derartige Schaltanlage im wesentlichen mit drei oder vier Lasttrennschaltern einsetzen läßt, wobei nur eine geringe Anzahl von Varianten möglich ist Sofern Schaltanlagen für erweiterte Aufgaben, wie z.B. mit Leistungsschaltern oder mit Meßfeldern kombiniert oder auch bei großer Feldzahl vorgesehen sind, sind besondere Maßnahmen erforderlich. Hier werden deshalb zur Zeit luftisolierte Einzelfelder verwendet, die man in entsprechender Menge und Ausstattung dem Lager entnehmen und zur benötigten Schaltanlage zusammenfügen kann Die Vorteile der gasisolierten, insbesondere SF₆- gasisolierten Bauweise bezüglich der Abmessungen und Klimaunabhängigkeit lassen es aber als wünschenswert erscheinen, ein ebenso flexibles System mit SF₆ -Isolation zu schaffen.

In der DE 2729571 ist eine weitere metallgekapselte, gasisolierte Schaltanlage mit mehreren aneinanderreihbaren Einzelfeldern (Schaltfeldern) beschrieben, bei der jedes Einzelfeld ein mit Isoliergas gefülltes Metallgehäuse darstellt, an dem an seiner Unterseite an einem Ansatz gasdicht angebrachte Durchführungen für anzuschließende Kabel angeordnet sind, und bei der die Einzelfelder durch in einem Metallkasten untergebrachte Sammelschienenen elektrisch miteinander verbunden werden. Der Metallkasten ist oberhalb der Kabeldurchführungen rückseitig und gasdicht anordbar, wobei dessen Rauminhalt mit dem Gasvolumen des jeweiligen Einzelfeldes in Verbindung steht. Der gasdichte Anschluß setzt vorbestimmte und vorbereitete Anschlußstellen voraus, die Variationsmöglichkeiten auf der Baustelle nicht zulassen. Überdies ist die Verbindung der Einzelfelder stets mit einem Eingriff in die SF₆ -Gas-Isolierung verbunden.

Aus der nachveröffentlichten EP-A-0564057 ist eine metallgekapselte, druckgasisolierte SF₆ -Schaltanlage mit mehreren aneinanderreihbaren Einzelfeldern bekannt, bei der jedes Einzelfeld ein mit Isoliergas gefülltes Metallgehäuse (Gastank) darstellt und in dem ein dreipoliger Vakuum-Leistungsschalter und ein ebenfalls dreipoliger Dreistellungs-Lasttrennschalter angeordnet sind. Jeder Gastank ist an seiner Unterseite mit einem rückseitig bündigen Ansatz versehen, an dem frontseitig Durchführungen für Sammelschienen angeordnet sind, wobei die Durchführungen in der Höhe gestuft angeordnet sind Die Tiefe des Ansatzes zusammen mit den eingesetzten Durchführungen und den angeschlossenen Sammelschienen überschreitet die Tiefe des übrigen Gastanks nur unwesentlich. An der Frontseite des Gastanks sind nebeneinander Durchführungen für Kabelabgänge angeordnet Die Durchführungen für Sammelschienen gestatten ein frontseitiges Anschließen der Sammelschienen, ohne daß ein Zugang zum Innenraum der Behälter gegeben sein muß.

Der Erfindung liegt nun die Aufgabe zugrunde, eine SF₆ -gasisolierte Schaltanlage der zuvor geschilderten Art zu entwickeln, die eine elektrische Verbindung von Sammelschienen bei aneinandergereihten Einzelfeldem unter rationellster Raumnutzung ohne Eingriffe in die SF₆ -Isolierung bei der Montage gestattet.

Diese Aufgabe wird erfindungsgemäß durch die im Kennzeichen des Anspruchs 1 des Anspruchssatzes 1 angegebene Kombination von konstruktiven Merkmalen gelöst.

Eine weitere Ausführungsform der Erfindung ist in den Ansprüchen 1-7 des Anspruchssatzes II beschrieben.

Die mit der Erfindung erzielten Vorteile bestehen insbesondere darin, daß nunmehr Einzelfelder einer SF₆-Schaltanlage in beliebiger Reihenfolge aneinandergereiht werden können und daß hierbei dem Kunden der Umgang mit SF₆-Gas auf der Baustelle wegen der hohen Ansprüche an die Dichtigkeit und Qualität erspart bleibt.

Vorteilhafte Ausführungen und Weiterbildungen des Gegenstandes nach Anspruch 1 sind den Unteransprüchen zu entnehmen.

Ein Ausführungsbeispiel der Erfindung ist in Zeichnungen dargestellt und wird im folgenden näher erläutert. Es zeigen
Fig. 1 ein Einzelfeld einer SF₆-Schaltanlage, in Vorderansicht
Fig. 2 in Seitenansicht
Fig. 3 eine aus mehreren Einzelfeldern zusammengesetzte SF₆-Schaltanlage, in Vorderansicht
Fig. 4 eine Sammelschienenverbindungsstelle in Seitenansicht, teilweise im Schnitt
Fig. 5 eine Sammelschienenverbindungsstelle für ein endseitiges Einzelfeld, in Seitenansicht und teilweise im Schnitt
Fig. 6 eine weitere Ausführungsform einer Sammelschienenverbindungsstelle in Seitenansicht und teilweise im Schnitt
Fig. 7 drei aneinandergereihte Einzelfelder mit mittiger Einspeisung, in Vorderansicht
Fig. 8 in Seitenansicht.

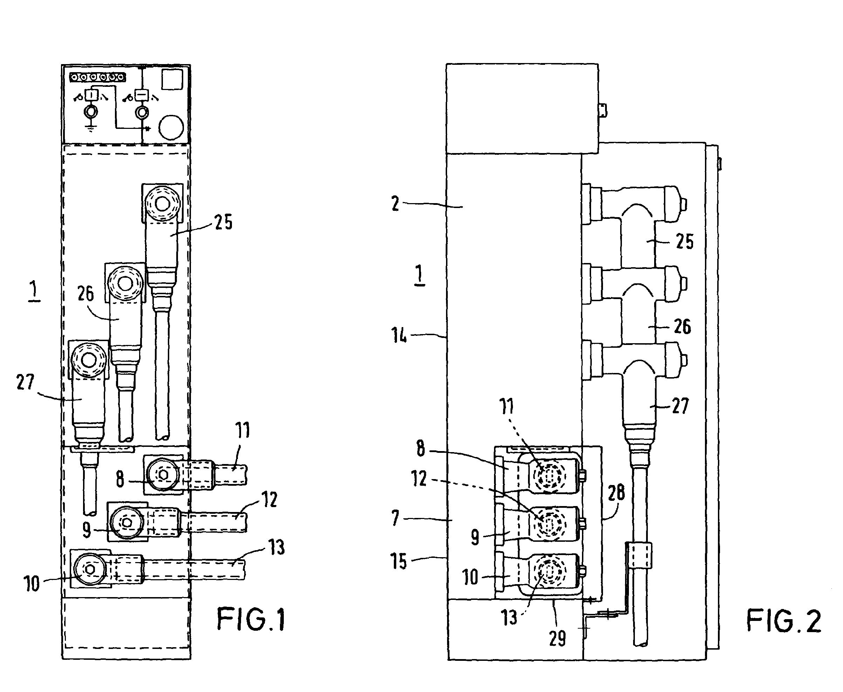

Nach Fig. 1 und 2 besteht ein Einzelfeld 1 aus einem Gastank 2, in welchem drei Lasttrennschalter 3 (nicht dargestellt) eingesetzt sind. Für die Energieleitung sind drei Sammelschienenabschnitte 11, 12 und 13 vorgesehen, die mit inneren Sammelschienen 6 (nicht dargestellt) verbunden sind. Durchführungen 8, 9 und 10 stellen die Verbindung der Sammelschienenabschnitte 11, 12, und 13 mit den Sammelschienen 6 (nicht dargestellt) innerhalb des Gastanks 2 her. Die Durchführungen 8, 9 und 10 sind hierbei an einem Ansatz 7 des Gastanks 2 eingesetzt. Der Ansatz 7 weist dabei eine Länge auf, die eine diagonale Anordnung der Durchführungen 8, 9 und 10 gestattet. Damit ist es möglich, die Sammelschienenabschnitte 11, 12 und 13 wahlweise nach einer oder beiden Seiten oder nach unten an die Durchführungen 8, 9 und 10 anzuschließen. Der Ansatz 7 bildet mit seiner Rückseite 15 einen bündigen Abschluß mit der Rückwand 14 des Gastanks 2. Die geringe Tiefe des Ansatzes 7 führt dazu, daß die Gesamttiefe an dieser Stelle bei eingesetzten Durchführungen die Tiefe des übrigen Gastanks nur unwesentlich überschreitet. Damit ist gewährleistet, daß die Durchführungen 8, 9 und 10 nicht mit den Schalterabgängen 25, 26 und 27 kollidieren. Außerdem ist der Bereich der Sammelschienenabschnitte 11, 12 und 13 durch einen Verschlußdeckel28vom Kabel oder Sicherungsbereich abgetrennt und durch ein eigenes Bodenblech 29 verschlossen, welches im Falle eines auftretenden überdrucks nach unten aufbiegbar ist.

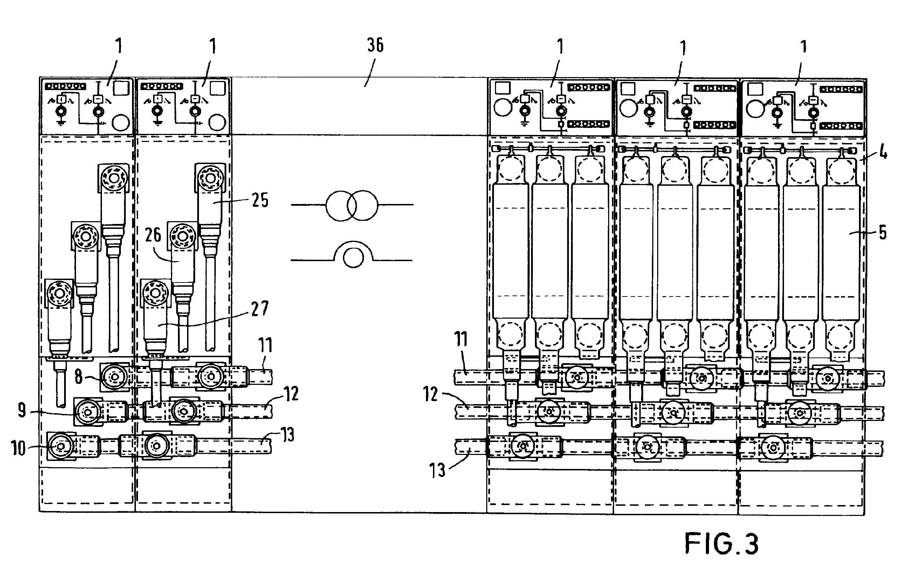

In Fig. 3 sind zwei Einzelfelder 1 für Lastrennschalter, ein Meßfeld 36 und drei Einzelfelder 1 für eine Lasttrennschalter-Sicherungskombination 4 aneinandergereiht. Mit 5 sind die zur Lasttrennschalter-Sicherungskombination 4 zugehörigen Hochspannungs-Hochleistungs-Sicherungen bezeichnet.

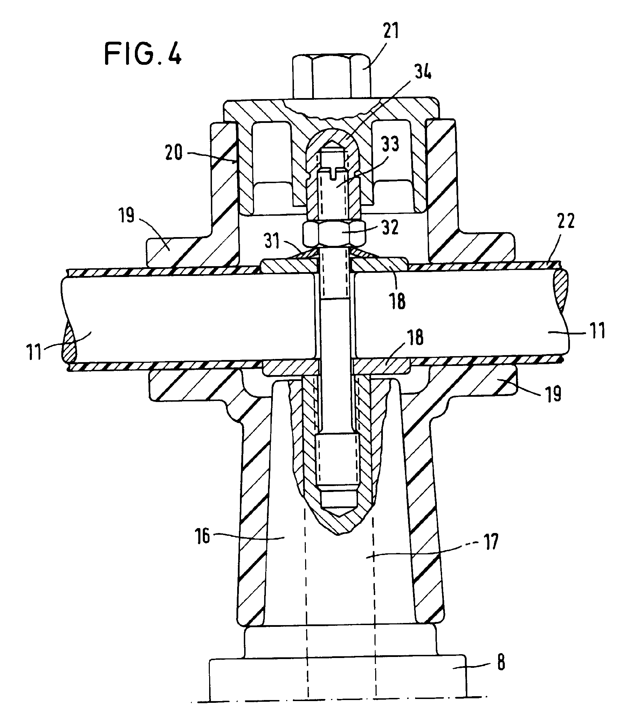

Nach Fig. 4 sind zwei Sammelschienenabschnitte 11 mit einem Durchführungsbolzen 17 verbunden. Hierzu ist ein Gewindebolzen 33 vorgesehen, der in einem Durchführungsbolzen 17 der Durchführung 8 eingeschraubt ist. Die elektrische Verbindung zwischen dem Gewindebolzen 33 und den Sammelschienenabschnitten 11 wird durch eine Schalenklemme 18 hergestellt. Der erforderliche Kontaktdruck wird durch eine Mutter 32 über eine Spannscheibe 31 auf die Schalenklemme 18 übertragen. Die Sammelschienenabschnitte 11 sind außerhalb des Kontaktbereichs der Schalenklemme 18 mit einer Isolierschicht 22 überzogen. Die Sammelschienenverbindungsstelle ist von einem Isolier-Formteil 19 umschlossen, das einerseits auf einem Außenkonus 16 der Durchführung 8 aufgeschoben ist und andererseits eine öffnung 20 aufweist, die eine einfache Montage der Sammelschienenverbindung gestattet. Diese öffnung 20 kann durch einen Verschlußstopfen 21 verschlossen werden. Hierzu befindet sich innerhalb des Verschlußstopfens 21 eine Eingießmutter 34, die auf den Gewindebolzen 33 aufschraubbar ist.

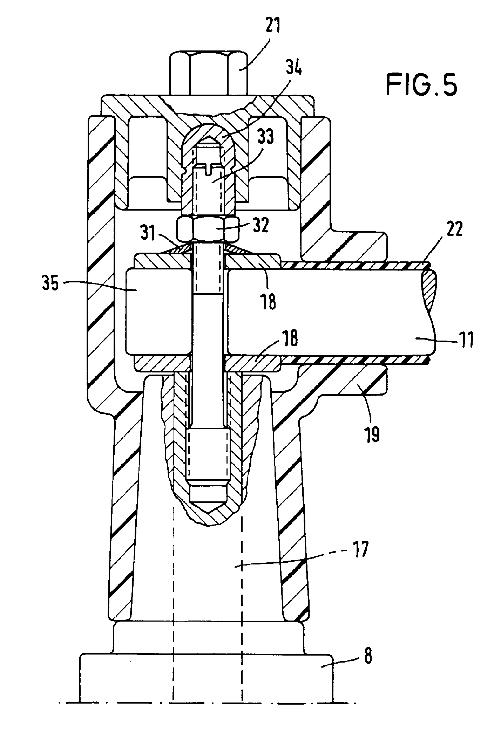

Die Sammelschienenverbindungsstelle nach Fig. 5 weist gegenüber Fig. 4 die Besonderheit auf, daß nur ein Sammelschienenabschnitt 11 angeschlossen ist. Damit die Schalenklemme 18 wirksam werden kann, ist ein Paßstück 35 auf der anderen Seite vorgesehen. Da das Isolier-Formteil 19 nur für den Anschluß eines Sammelschienenabschnitts 11 vorgesehen ist, bleibt die andere Seite des Isolier-Formteils geschlossen Alle übrigen Einzelheiten dieser Ausführungsform entsprechen der Darstellung nach Fig. 4.

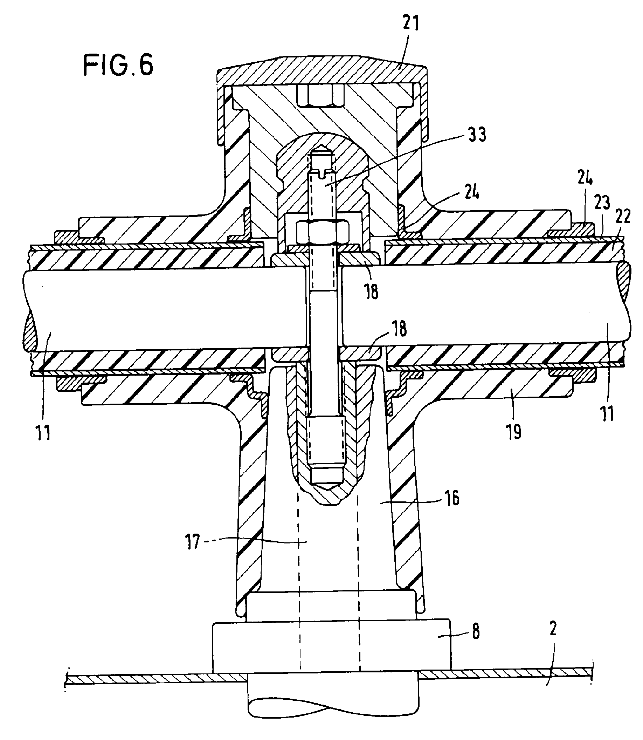

Nach Fig. 6 sind die angeschlossenen Sammelschienenabschnitte 11 von einer Isolierschicht 22 umgeben. Auf dieser Isolierschicht 22 ist eine Leitschicht 23 aufgetragen. In das Isolier-Formteil 19 sind an den kritischen Öffnungen Feldsteuerbeläge 24 eingebracht, die das elektrische Feld in diesen Bereichen vergleichmäßigen sollen. Alle übrigen Einzelheiten entsprechen im wesentlichen den Darstellungen der Figuren 4 und 5.

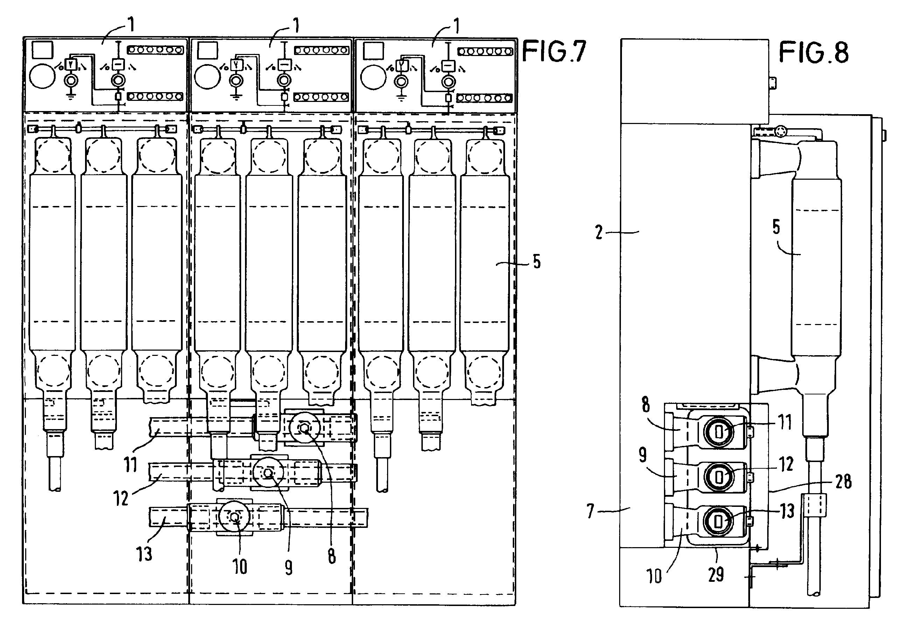

Nach Fig. 7 und 8 sind drei Einzelfelder mit einer Lasttrennschalter-Sicherungskombination dargestellt. Hierbei sind nur die Sicherungen 5 sichtbar, während sich die Lasttrennschalter 3 im nicht sichtbaren Teil des Gastanks 2 befinden. Die Lasttrennschalter-Sicherungskombination ist mit dem Bezugszeichen 4 gekennzeichnet. Das Wesentliche in Fig. 7 ist die mittige Einspeisung über die Sammelschienenabschnitte 11, 12 und 13. Alle übrigen Einzelheiten der Figuren 7 und 8 entsprechen der Fig. 3.

### Bezugszeichenliste

1 = Einzelfeld
2 = Gastank
3 = Lasttrennschalter
4 = Lasttrennschalter-Sicherungskombination
5 = Hochspannungs-Hochleistungs-Sicherungen
6= innere Sammelschienen
7 = Ansatz
8 = Durchführung
9= Durchführung
10 Durchführung
11 = Sammelschienenabschnitt
12 = Sammelschienenabschnitt
13 = Sammelschienenabschnitt
14 = Rückwand des Gastanks
15 = Rückseite des Ansatzes
16 = Außenkonus
17 = Durchführungsbolzen
18 = Schalenklemme
19 = Isolier-Formteil
20 = öffnung des Isolierformteils
21 = Verschlußstopfen
22 = Isolierschicht
23 = Leitschicht
24 = Feldsteuerbeläge
25 = Schalterabgang
26 = Schalterabgang
27 = Schalterabgang
28 Verschlußdeckel
29 Bodenblech
30
31 = Spannscheibe
32 = Skt-Mutter
33 = Gewindebolzen
34 = Eingießmutter
35 = Paßstück
36 = Meßfeld

## Patentansprüche (Patentansprüche für folgende(n) Vertragsstaat(en) : AT, FR, GB, SE)

1. Metallgekapselte, druckgasisolierte SF₆-Schaltanlage mit mehreren aneinanderreihbaren Einzelfeldem (1), von denen jedes einen eigenen Gastank (2) aufweist, in dem wahlweise Trennschalter, Lasttrennschalter (3), Lasttrennschalter-Sicherungskombinationen (4), Leistungsschalter und Sammelschienen (6) einsetzbar sind, wobei an jedem Einzelfeld (1) auf einer Seite für jede Phase eines Drehstromnetzes ein Schalterabgang (25, 26, 27) und an einem weiteren Seitenwandbereich für jede Phase äussere Sammelschienenabschnitte (11, 12, 13) angeordnet sind, dadurch gekennzeichnet, daß für die äußeren Sammelschienenabschnitte (11, 12, 13) an einem an der Unterseite des Gastanks (2) ausgebildeten Ansatz (7) schalterabgangsseitig Durchführungungen (8, 9, 10) angeordnet sind, und daß die Tiefe des Ansatzes (7) geringer als die Tiefe des Gastanks (2) und so ausgelegt ist, daß bei eingesetzten Durchführungen (8, 9, 10) und den angeschlossenen äußeren Sammelschienenabschnitten (11, 12, 13) die Tiefe des übrigen Gastanks (2) nur unwesentlich überschritten wird.

2. Schaltanlage nach Anspruch 1, dadurch gekennzeichnet, daß die jeweiligen Enden der äußeren Sammelschienenabschnitte (11, 12, 13) jeweils mittels einer zweigeteilten Schalenklemme (18) mit einem in der Durchführung (8, 9, 10) angeordneten Durchführungsbolzen (17) für den Anschluß an eine Sammelschienen (6) im Gastank (2) oder an einen Schalter elektrisch verbunden sind.

3. Schaltanlage nach Anspruch 2, dadurch gekennzeichnet, daß die Sammelschienenverbindungsstelle von einem Isolier-Formteil (19), vorzugsweise aus Silikonkautschuk, umschlossen ist, welches mit Vorspannung den Konus (16) einer Durchführung (8, 9,10) und die Enden der äußeren Sammelschienenabschnitte (11, 12, 13) abdeckt, wobei eine Öffnung (20) des Isolier-Formteils (19) mit einem Stopfen (21) verschließbar ist.

4. Schaltanlage nach Anspruch 3, dadurch gekennzeichnet, daß das Isolier-Formteil (19) an allen Öffnungen mit Feldsteuerbelägen (24) versehen ist.

5. Schaltanlage nach Anspruch 3 oder 4, dadurch gekennzeichnet, daß das Isolier-Formteil (19) außen mit einer Leitschicht versehen ist

6. Schaltanlage nach einem der Ansprüche 1 bis 5, dadurch gekennzeichnet, daß die äußeren Sammelschienenabschnitte (11, 12, 13) mit einer Isolierschicht (22) aus Silikonkautschuk versehen sind.

7. Schaltanlage nach einem oder mehreren der vorhergehenden Ansprüche, dadurch gekennzeichnet, daß der Sammelschienenbereich vom Kabel-oder Sicherungsbereich durch einen Verschlußdekkel (28) abgetrennt und durch ein eigenes Bodenblech (29) verschlossen ist, das bei auftretendem Überdruck nach unten aufbiegbar ist.

## Patentansprüche (Patentansprüche für folgende(n) Vertragsstaat(en) : CH, DE, ES, IT, LI)

1. Metallgekapselte, druckgasisolierte SF₆-Schaltanlage mit mehreren aneinanderreihbaren Einzelfeldern (1), von denen jedes einen eigenen Gastank (2) aufweist, in dem wahlweise Trennschalter, Lasttrennschalter (3), Lasttrennschalter-Sicherungskombinationen (4), Leistungsschalter und Sammelschienen (6) einsetzbar sind, wobei an jedem Einzelfeld (1) an einer Seite für jede Phase eines Drehstromnetzes ein Schalterabgang (25, 26, 27) und ein an der Unterseite des Gastanks (2) ausgebildeter Ansatz (7) mit schalterabgangsseitigen Durchführungen (8, 9, 10) für äußere Sammelschienenabschnitte (11, 12, 13) angeordnet sind, daß die Tiefe des Ansatzes (7) geringer als die Tiefe des Gastanks (2) und so ausgelegt ist, daß bei eingesetzten Durchführungen (8, 9, 10) und den angeschlossenen äußeren Sammelschienenabschnitten (11, 12, 13) die Tiefe des übrigen Gastanks (2) nur unwesentlich überschritten wird, und Antriebsvorrichtungen für die Schalter oberhalb des jeweiligen Gastanks (2) angeordnet sind.

2. Schaltanlage nach Anspruch 1, dadurch gekennzeichnet, daß die jeweiligen Enden der äußeren Sammelschienenabschnitte(11, 12, 13)jeweils mittels einer zweigeteilten Schalenklemme (18) mit einem in der Durchführung (8, 9, 10) angeordneten Durchführungsbolzen (17) für den Anschluß an eine Sammelschiene (6) im Gastank (2) oder an einen Schalter elektrisch verbunden sind.

3. Schaltanlage nach Anspruch 2, dadurch gekennzeichnet, daß die Sammelschienenverbindungsstellevon einem Isolier-Formteil (19), vorzugsweise aus Silikonkautschuk, umschlossen ist, welches mit Vorspannung den Konus (16) einer Durchführung (8, 9, 10) und die Enden der äußeren Sammelschienenabschnitte (11, 12, 13) abdeckt, wobei eine Öffnung (20) des Isolier-Formteils (19) mit einem Stopfen (21) verschließbar ist.

4. Schaltanlage nach Anspruch 3, dadurch gekennzeichnet, daß das Isolier-Formteil (19) an allen Öffnungen mit Feldsteuerbelägen (24) versehen ist.

5. Schaltanlage nach Anspruch 3 oder 4, dadurch gekennzeichnet, daß das Isolier-Formteil (19) außen mit einer Leitschicht versehen ist.

6. Schaltanlage nach einem der Ansprüche 1 bis 5, dadurch gekennzeichnet, daß die äußeren Sammelschienenabschnitte (11, 12, 13) mit einer Isolierschicht (22) aus Silikonkautschuk versehen sind.

7. Schaltanlage nach einem oder mehreren der vorhergehenden Ansprüche, dadurch gekennzeichnet, daß der Sammelschienenbereich vom Kabel-oder Sicherungsbereich durch einen Verschlußdekkel (28) abgetrennt und durch ein eigenes Bodenblech (29) verschlossen ist, das bei auftretendem Überdruck nach unten aufbiegbar ist.

## Claims (Claims for the following Contracting State(s) : AT, FR, GB, SE)

1. Metal-enclosed, compressed-gas-insulated SF₆ switchgear having a plurality of individual sections (1) capable of being arranged side by side, each of which has its own gas tank (2) in which disconnectors, switch-disconnectors (3), switch-disconnec- tor/fuse combinations (4), circuit-breakers and bus- bars (6) can be selectively inserted, there being arranged on one side of each individual section (1) a switch outgoing branch (25, 26, 27) for each phase of a three-phase system and at another sidewall region outer busbar sections (11, 12, 13) for each phase, characterised in that, for the outer busbar sections (11, 12, 13), bushings (8, 9, 10) are arranged, on the side of the switch outgoing branches, on a projection (7) formed on the underside of the gas tank (2), and in that the depth of the projection (7) is dimensioned smaller than the depth of the gas tank (2) and such that, with the bushings (8, 9, 10) inserted and the outer busbar sections (11, 12, 13) connected, the depth of the rest of the gas tank (2) is only negligibly exceeded.

2. Switchgear according to Claim 1, characterised in that the respective ends of the outer busbar sections (11, 12, 13) are each electrically connected by means of a split shell-type terminal (18) to a bushing conductor stud (17), arranged in the bushing (8, 9, 10), for connection to a busbar (6) in the gas tank (2) or to a switch.

3. Switchgear according to Claim 2, characterised in that the busbar connection point is enclosed by a moulded insulating part (19), preferably of silicone rubber, which covers, with prestress, the cone (16) of a bushing (8, 9, 10) and the ends of the outer busbar sections (11, 12, 13), an opening (20) of the moulded insulating part (19) being closable by a stopper (21).

4. Switchgear according to Claim 3, characterised in that the moulded insulating part (19) is provided with field control linings (24) at all openings.

5. Switchgear according to Claim 3 or 4, characterised in that the moulded insulating part (19) is provided with a conducting layer on the outside.

6. Switchgear according to one of Claims 1 to 5, characterised in that the outer busbar sections (11, 12, 13) are provided with an insulating layer (22) of silicone rubber.

7. Switchgear according to one or more of the preceding claims, characterised in that the busbar region is separated from the cable region or fuse region by a cover (28) and closed by its own bottom plate (29), which is able to bend downwards in the event of excess pressure arising.

## Claims (Claims for the following Contracting State(s) : CH, DE, ES, IT, LI)

1. Metal-enclosed, compressed-gas-insulated SF₆ switchgear having a plurality of individual sections (1) capable of being arranged side by side, each of which has its own gas tank (2) in which disconnectors, switch-disconnectors (3), switch-disconnec- tor/fuse combinations (4), circuit-breakers and bus- bars (6) can be selectively inserted, there being arranged on one side of each individual section (1) a switch outgoing branch (25, 26, 27) for each phase of a three-phase system, and a projection (7) formed on the underside of the gas tank (2) and having bushings (8, 9, 10), on the side of the switch outgoing branches, for outer busbar sections (11, 12, 13), the depth of the projection (7) being dimensioned smaller than the depth of the gas tank (2) and such that, with the bushings (8, 9, 10) inserted and the outer busbar sections (11, 12, 13) connected, the depth of the rest of the gas tank (2) is only negligibly exceeded, and drive devices for the switches being arranged above the respective gas tank (2).

2. Switchgear according to Claim 1, characterised in that the respective ends of the outer busbar sections (11, 12, 13) are each electrically connected by means of a split shell-type terminal (18)-to a bushing conductor stud (17), arranged in the bushing (8, 9, 10), for connection to a busbar (6) in the gas tank (2) or to a switch.

3. Switchgear according to Claim 2, characterised in that the busbar connection point is enclosed by a moulded insulating part (19), preferably of silicone rubber, which covers, with prestress, the cone (16) of a bushing (8, 9, 10) and the ends of the outer busbar sections (11, 12, 13), an opening (20) of the moulded insulating part (19) being closable by a stopper (21

4. Switchgear according to Claim 3, characterised in that the moulded insulating part (19) is provided with field control linings (24) at all openings.

5. Switchgear according to Claim 3 or 4, characterised in that the moulded insulating part (19) is provided with a conducting layer on the outside.

6. Switchgear according to one of Claims 1 to 5, characterised in that the outer busbar sections (11, 12, 13) are provided with an insulating layer (22) of silicone rubber.

7. Switchgear according to one or more of the preceding claims, characterised in that the busbar region is separated from the cable region or fuse region by a cover (28) and closed by its own bottom plate (29), which is able to bend downwards in the event of excess pressure arising.

## Revendications (Revendications pour l'(les) Etat(s) contractant(s) suivant(s) : suivants : AT, FR, GB, SE)

1. Installation de commutation à blindage métallique isolée par du gaz SF₆ sous pression, comportant plusieurs champs séparés (1), susceptibles d'être juxtaposés, comportant chacun son propre réservoir de gaz (2), et pouvant recevoir au choix des disjoncteurs, des sectionneurs à coupure en charge (3), des combinaisons (sectionneurs à coupure en charge-fusible) (4), des commutateurs de puissance et des barres omnibus (6), et dans chaque champ séparé, d'un côté, pour chaque phase d'un réseau de courant alternatif il y a une sortie de commutateur (25, 26, 27) et sur une autre zone de la paroi latérale, pour chaque phase il y a des segments de barres omnibus extérieurs (11, 12, 13), caractérisée en ce que
pour les segments de barres omnibus extérieurs (11, 12, 13) sur un épaulement (7) réalisé sur laface inférieure du réservoir à gaz (2), il y a des passages (8, 9, 10) du côté de la sortie du commutateur et la profondeur de l'épaulement (7) inférieure à la profondeur du réservoir à gaz (2) est conçue pour que lorsque les passages (8, 9, 10) sont en place et les segments de barres omnibus extérieurs (11, 12, 13) raccordés, on ne dépasse que de manière négligeable la profondeur du restant du réservoir à gaz (2).

2. Installation selon la revendication 1,
caractérisée en ce que
les extrémités respectives des segments de barres omnibus extérieurs (11, 12, 13) sont reliées électriquement chaque fois par l'intermédiaire d'un collier (18) en deux parties à un boulon traversant (17) placé dans l'un des passages (8, 9, 10) pour le branchement sur une barre omnibus (6) dans le réservoir à gaz (2) ou sur un commutateur.

3. Installation selon la revendication 2,
caractérisée en ce que
le point de liaison des barres omnibus est entouré par une pièce moulée isolante (19), de préférence en caoutchouc de silicone, qui recouvre avec précontrainte le cône (16) d'un passage (8, 9, 10) et les extrémités des segments de barres omnibus extérieurs (11, 12, 13), une ouverture (20) de la pièce moulée (19) isolante pouvant être fermée par un bouchon (21).

4. Installation selon la revendication 3,
caractérisée en ce que
la pièce moulée isolante (19) est munie, au niveau de toutes ses ouvertures, de garnitures (24) de dispersion de champ.

5. Installation selon la revendication 3 ou 4,
caractérisée en ce que
la pièce moulée isolante (19) est munie extérieurement d'une couche conductrice.

6. Installation selon l'une des revendications 1 à 5,
caractérisée en ce que
les segments de barres omnibus extérieurs (11, 12, 13) sont munis d'une couche isolante (22) en caoutchouc au silicone.

7. Installation selon l'une ou plusieurs des revendications précédentes,
caractérisée en ce que
la zone des barres omnibus est séparée de la zone des câbles ou des fusibles par un capot (28) et est fermée par une tôle de fond (29) indépendante qui peut se déformer et s'ouvrir vers le bas en cas de surpression.

## Revendications (Revendications pour l'(les) Etat(s) contractant(s) suivant(s) : suivants : CH, DE, ES, IT, LI)

1. Installation de commutation à blindage métallique, isolée par du gaz SFₛ sous pression, comportant plusieurs champs séparés (1), susceptibles d'être juxtaposés, comportant chacun son propre réservoir de gaz (2), et pouvant recevoir au choix des disjoncteurs, des sectionneurs à coupure en charge (3), des combinaisons (sectionneurs à coupure en charge-fusible) (4), des commutateurs de puissance et des barres omnibus (6), selon laquelle dans chaque champ séparé, d'un côté, pour chaque phase d'un réseau de courant alternatif il y a une sortie de commutateur (25, 26, 27) et sur un épaulement (7) réalisé sur la face inférieure du réservoir à gaz (2),il y a des passages (8, 9, 10) du côté de la sortie du commutateur pour les segments de barres omnibus extérieurs (11, 12, 13) et la profondeur de l'épaulement (7) inférieure à la profondeur du réservoir de gaz (2) est conçue pour que lorsque les passages (8, 9, 10) sont en place et les segments des barres omnibus extérieurs (11, 12, 13) raccordés, on ne dépasse que de manière négligeable la profondeur du restant du réservoir à gaz (2) et les dispositifs d'entraînement pour les commutateurs sont au-dessus de chaque réservoir à gaz (2).

2. Installation selon la revendication 1,
caractérisée en ce que
les extrémités respectives des segments de barres omnibus extérieurs (11, 12, 13) sont reliées électriquement chaque fois par l'intermédiaire d'un collier (18) en deux parties à un boulon traversant (17) placé dans l'un des passages (8, 9, 10) pour le branchement sur une barre omnibus (6) dans le réservoir à gaz (2) ou sur un commutateur.

3. Installation selon la revendication 2,
caractérisée en ce que
le point de liaison des barres omnibus est entouré par une pièce moulée isolante (19), de préférence en caoutchouc de silicone, qui recouvre avec précontrainte le cône (16) d'un passage (8, 9, 10) et les extrémités des segments de barres omnibus extérieurs (11, 12, 13), une ouverture (20) de la pièce moulée (19) isolante pouvant être fermée par un bouchon (21).

4. Installation selon la revendication 3,
caractérisée en ce que
la pièce moulée isolante (19) est munie, au niveau de toutes ses ouvertures, de garnitures (24) de dispersion de champ.

5. Installation selon la revendication 3 ou 4,
caractérisée en ce que
la pièce moulée isolante (19) est munie extérieurement d'une couche conductrice.

6. Installation selon l'une des revendications 1 à 5,
caractérisée en ce que
les segments de barres omnibus extérieurs (11, 12, 13) sont munis d'une couche isolante (22) en caoutchouc au silicone.

7. Installation selon l'une ou plusieurs des revendications précédentes,
caractérisée en ce que
la zone des barres omnibus est séparée de la zone des câbles ou des fusibles par un capot (28) et est fermée par une tôle de fond (29) indépendante qui peut se déformer et s'ouvrir vers le bas en cas de surpression.
